# EUROPÄISCHE PATENTSCHRIFT

(11) **EP 1 519 825 B1**
(45) Veröffentlichungstag und Bekanntmachung des Hinweises auf die Patenterteilung: **07.03.2007**
(21) Anmeldenummer: 03737884.1
(22) Anmeldetag: 15.05.2003
(51) Int. Cl.: B29C 53/80, B29D 23/20

(54) **SPIRALISIERVORRICHTUNG**
SPIRALING DEVICE
DISPOSITIF DE SPIRALISATION

(30) Priorität: 28.06.2002 DE 10229074
(43) Veröffentlichungstag der Anmeldung: 06.04.2005
(73) Patentinhaber: ContiTech Luftfedersysteme GmbH, 30165 Hannover (DE)
(72) Erfinder: BERGER, Markus, 31319 Sehnde (DE); OEHL, Rainer, 30938 Grossburgwedel (DE); BINDER, Klaus, 31157 Sarstedt (DE)
(74) Vertreter: Finger, Karsten
(86) Internationale Anmeldenummer: PCT/DE2003/001563
(87) Internationale Veröffentlichungsnummer: WO 2004/002718

(56) Entgegenhaltungen:
- DE-A- 3 109 365
- DE-A- 3 824 757
- GB-A- 873 174
- US-A- 2 315 332
- US-A- 4 067 362

## Beschreibung

Die Erfindung betrifft eine Spiralisiervorrichtung zum Aufbringen einer spiralförmigen Fadenlage auf einen länglichen Träger, der in Richtung der Trägerlängsachse vortreibbar ist. Die Spiralisiervorrichtung hat einen um die Längsachse rotierbaren Rotor und eine Vielzahl von sich in Richtung der Trägerlängsachse erstreckende Fadenspulen-Trägerachsen, die auf einem Umkreisradius des Rotors verteilt angeordnet und jeweils zum Aufnehmen einer Vielzahl von Fadenspulen ausgebildet sind.

Insbesondere zur Verstärkung von Kautschuk- oder Kunststoffschläuchen und -rohren mit Festigkeitsträgerschichten werden dichte Fadenlagen spiralförmig auf einen Kunststoff- oder Kautschukträger mit mindestens einer Spiralisiervorrichtung aufspiralisiert. Ein solches Herstellungsverfahren ist beispielsweise in dem deutschen Gebrauchsmuster 1928 736 und der DE 38 24 757 A1 beschrieben. Hierbei werden Fäden von einer Vielzahl auf dem Umfang eines kreisförmigen Spulenträgers angeordneten Fadenspulen abgezogen, und durch radial in dem Spulenträger angeordnete Bohrungen auf einen extrudierten Kunststoffschlauch geführt. Der Spulenträger rotiert hierbei, so dass auf dem längs der Rotationsachse vorgetriebenen Kunststoffschlauch eine spiralförmige Fadenlage aufgebracht wird. Eine weitere Spiralisiervorrichtung ist hinter der ersten Spiralisiervorrichtung angeordnet und rotiert gegensinnig, so dass eine weitere gegenläufige Fadenlage entsteht.

Mit einem weiteren Extruder wird auf diese beiden Fadenlagen eine weitere Kunststoffschicht aufgetragen.

Die begrenzte Anzahl der auf dem Umfang der Spiralisiervorrichtung vorhandenen Bohrungen ist nachteilig. Die Anzahl der pro Spiralisiervorrichtung aufspiralisierbaren Fäden und damit die Dichte der Fadenlage begrenzt. Die Anzahl der Bohrungen kann nicht beliebig erhöht werden.

In der EP 0 605 767 A1 ist eine verbesserte Spiralisiervorrichtung offenbart, bei der eine Vielzahl von Spulen auf mehreren Umkreisradien eines Tellers angeordnet sind. Die Fadenspulen werden von Fadenspulen-Trägerachsen aufgenommen, die zur Aufnahme von jeweils drei Spulen nebeneinander ausgebildet sind.

Die Fäden der Fadenspulen werden radial nach innen abgezogen und durch Fadenführungsstege mit Durchführungsbohrungen in einen Extrusionskopf geleitet.

Nachteilig sind die einzelnen Fadenspulen mit den entsprechenden Fäden nur schwer zugänglich, so dass die Rüstzeit und der erforderliche Rüstaufwand relativ groß ist. Zudem wird eine gleichmäßige Fadenspannung aller Fäden nicht im ausreichenden Maße sichergestellt.

Die US-A-4 067 362 offenbart eine Spiralisiervorrichtung zum Aufbringen einer spiralförmigen Fadenlage auf einen länglichen Träger, mit einem um die Trägerlängsachse rotierbaren Rotor und mit zwei von sich in Richtung der Trägerlängsachse erstreckenden Fadenspulen-Trägerachsen, die auf einem Umkreisradius des Rotors verteilt angeordnet sind und die jeweils zum Aufnehmen von Fadenspulen ausgebildet sind, wobei die Fadenspulen Fadenbremselemente gestatten.

Aufgabe der Erfindung war es daher, eine verbesserte Spiralisiervorrichtung zu schaffen, bei dem die vorstehenden Nachteile vermieden oder verringert werden.

Die Aufgabe wird durch die gattungsgemäße Spiralisiervorrichtung erfindungsgemäß dadurch gelöst, dass an einer Stirnseite des Rotors Fadenbremselemente über den Umfang verteilt angeordnet und synchron zueinander ansteuerbar sind. Die Fäden werden von den Fadenspulen vorzugsweise tangential abgenommen und mit Fadenführungselementen über die Fadenbremselemente und einen Kammring, der den Träger umschließt, auf den Träger geleitet.

Durch die Anordnung der Fadenbremselemente und des Kammrings an einer Stirnseite des Rotors und durch die Fadenspulen-Trägerachsen am Umfang des Rotors kann sichergestellt werden, dass die von den Fadenspulen abgenommenen Fäden gleichermaßen mit annähernd gleichen Umlenkwinkeln geführt und mit einer gleichen Fadenspannung beaufschlagt werden können. Damit wird gewährleistet, dass die Fadenspannung eines Fadens über der Zeit und Fadenspannungen der Fäden untereinander gleichmäßig sind. Durch tangentiales Abziehen der Fäden von den Fadenspulen wird zudem verhindert, dass sich wie beim Über-Kopf-Abzug die Fäden beim Abziehen in sich verwinden und möglicherweise bei Lockerung Schlaufen bilden, die zu einem Fadenriss führen können, was zu einer Beeinträchtigung der Produktqualität führt.

Durch die Anordnung der erfindungsgemäßen Spiralisiervorrichtung sind sämtliche Fadenspulen und Fäden leicht zugänglich und sichtbar, so dass das Rüsten der Spiralisiervorrichtung und die Überwachbarkeit optimiert ist.

Die Fadenbremselemente sind vorzugsweise als zylinderförmige rotierbare Trommeln, sogenannte Wellen-Fournisseure ausgebildet, die mehrere Fadenaufnahmenuten haben. Die Fadenaufnahmenuten erstrecken sich jeweils über den Umfang der Trommel und sind in Richtung der Längsachse der Trommel voneinander beabstandet. Jeweils ein Faden wird mehrfach um eine Fadenaufnahmenut umschlungen. Auf diese Weise werden sämtliche mit einem Fadenbremselement gekoppelten Fäden gleichermaßen abgebremst und es wird eine gleichmäßige Fadenspannung gewährleistet.

Jedes Fadenbremselement kann eine eigene Antriebs-/ Bremseinheit haben. Alternativ können jedoch auch mehrere Fadenbremselemente beispielsweise über Zahnräder, Ketten oder Riemen miteinander gekoppelt und gemeinsam angetrieben oder gebremst werden, um die Fadenspannung zu erhöhen bzw. zu vermindern.

Zur Erzeugung der Fadenspannung können auch Bremselemente in der Lagerung der Fadenspule integriert sein.

Besonders vorteilhaft ist es, wenn der Rotor aus separaten Kreissegmenten zusammengesetzt ist und die Fadenbremselemente jeweils eines Kreissegments miteinander gekoppelt sind. Auf diese Weise wird die Fertigung und Wartung des Rotors vereinfacht.

Um eine gleichmäßige Fadenspannung für alle Fäden zu gewährleisten, ist vorzugsweise eine zentrale Steuereinheit für die Fadenbremselemente vorgesehen, mit denen die Antriebs-/ Bremseinheiten so gesteuert werden, dass eine gleichmäßige Einstellung der Fadenspannungen aller Fäden gewährleistet wird.

Die zum Umlenken des Fadens mit einem Winkel von mehr als 30° vorgesehenen Fadensführungselemente sind vorzugsweise als Umlenkrollen ausgebildet. Damit wird sichergestellt, dass die Fadenspannung durch die Fadenumlenkung möglichst gering beeinflusst wird.

Die Fadenspulen-Trägerachsen sind vorzugsweise jeweils zwischen den beiden voneinander beabstandeten Stirnseiten des Rotors lösbar gelagert. Hierdurch können die Fadenspulen leicht ausgewechselt und die Rüstzeit für die Spiralisiervorrichtung kann weiter reduziert werden.

Der Kammring hat eine Durchführungsbohrung für den Träger im Zentrum des Kammrings und eine Vielzahl von sich radial vom Außenumfang erstreckenden Schlitzen zur Aufnahme jeweils eines Fadens. Im Unterschied zu den herkömmlichen Bohrungen zur Durchführung der Fäden haben die Schlitze den Vorteil, dass eine Vielzahl von Fäden auf einem relativ kleinen Umfang getrennt voneinander geführt werden können. Zudem können die Fäden leicht in die Schlitze eingelegt werden und müssen nicht mühsam durch Bohrungen hindurchgefädelt werden.

Im Kammring ist zentrisch eine Innenhülse angeordnet, die den Träger eng umschließt. Die einlaufseitig an den Träger angrenzende Innenkante der Innenhülse ist radial gefast, so dass die Fäden von den Schlitzen im Kammring über die radiale Fase unmittelbar auf den Träger geführt werden.

Die Erfindung wird nachfolgend anhand der beigefügten Zeichnung näher erläutert. Es zeigt:

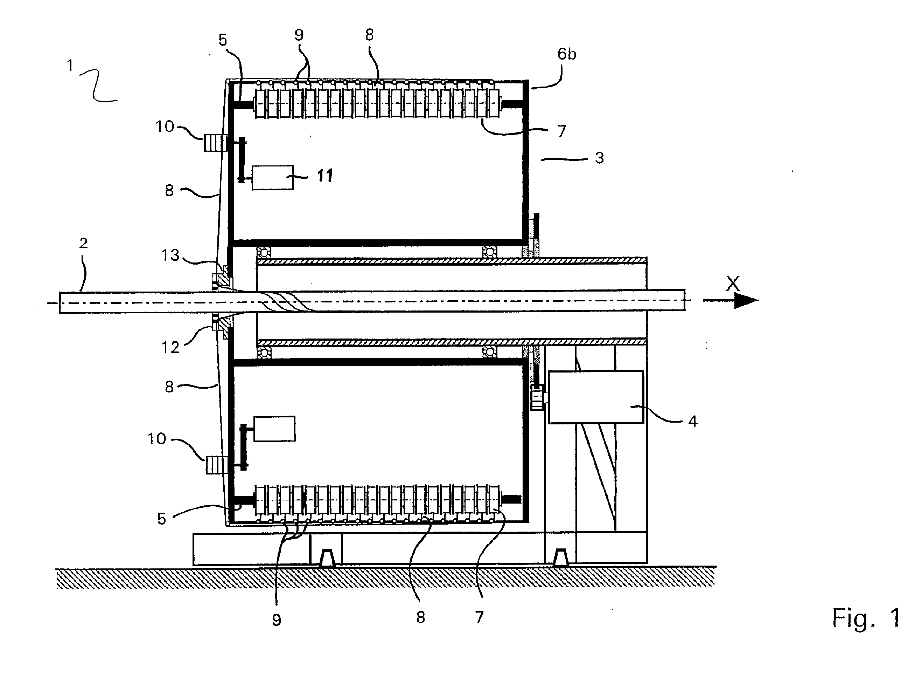

- Figur 1 -: eine Querschnittansicht der erfindungsgemäßen Spiralisiervorrichtung.

Die Figur 1 lässt eine Querschnittsansicht der erfindungsgemäßen Spiralisiervorrichtung 1 erkennen. Ein Träger 2, wie zum Beispiel aneinandergereihte zylindrische Rohre mit mindestens einer auf dem Rohr extrudierten Kautschukschicht, wird in Trägerlängsachse X des Trägers 2 durch das Zentrum der Spiralisiervorrichtung 1 hindurch geführt und vorgetrieben. Die Spiralisiervorrichtung 1 hat einen Rotor 3, der mit einer Antriebseinheit 4 angetrieben ist und um die Längsachse des Trägers 2 rotiert. An mindestens einen Umkreisradius des Rotors 3 sind eine Vielzahl von Fadenspulen-Trägerachsen 5 verteilt angeordnet. Die Fadenspulen-Trägerachsen 5 erstrecken sich zwischen einer ersten Stirnseite 6a und der zweiten Stirnseite 6b des Rotors 3 und sind vorzugsweise lösbar in Klemmhaltern gelagert. Jede Fadenspulen-Trägerachse 5 ist zur Aufnahme einer Vielzahl von Fadenspulen 7 ausgebildet, die in Richtung der Trägerlängsachse X auf der Fadenspulen-Trägerachse 5 rotierbar gelagert sind. Die Achsen der Fadenspulen 7 erstrecken sich ebenfalls in Richtung der Trägerlängsachse X.

Die auf den Fadenspulen 7 aufgewickelten Fäden 8 werden tangential von den Fadenspulen 7 abgezogen und mit Fadenführungselementen 9 zu der ersten Stirnseite 6a des Rotors 3 geführt. Auf der ersten Stirnseite 6a des Rotors 3 sind eine Vielzahl von Fadenbremselementen 10 über den Umfang verteilt angeordnet. Die Fadenbremselemente 10 sind derart mit mindestens einer Antriebs-/ Bremseinheit 11 gekoppelt, dass die Fäden 8 gleichmäßig in Ihrer Fadenspannung beeinflusst werden können. Hierzu sind die Fadenbremselemente 10 als zylinderförmige rotierbare Trommeln ausgebildet und haben mehrere Fadenaufnahmenuten, die sich jeweils über den Umfang der Trommel erstrecken und in Richtung der Längsachse der Trommel voneinander beabstandet sind. Jeweils ein Faden 8 ist mehrfach um eine Fadenaufnahmenut geschlungen und wird von dieser aufgenommen. Über einen Riemen-, Ketten- oder Zahnradtrieb sind mehrere Fadenbremselemente 10 miteinander gekoppelt und von einer gemeinsamen Antriebs-/ Bremseinheit angetrieben bzw. gebremst. Die mindestens eine Antriebs-/ Bremseinheit 11 wird von einer Steuereinheit so gesteuert, dass alle Fadenbremselemente 10 der Spiralisiervorrichtung 1 zueinander synchronisiert sind und eine gleichmäßige Fadenspannung gewährleistet wird.

Von den Fadenbremselementen 10 werden die Fäden radial nach innen zu einem Kammring 12 geführt. Der Kammring 12 hat eine Durchführungsbohrung für den Träger im Zentrum des Kammrings 12 sowie eine Vielzahl von sich radial vom Außenumfang des Kammrings 12 erstreckenden Schlitzen zur Aufnahme jeweils eines Fadens. Im Kammring 12 ist eine Innenhülse 13 angeordnet, die den Träger 2 umschließt. Die einlaufseitig an den Träger 2 angrenzende Innenkante der Innenhülse 13 ist radial gefast, so dass die Fäden 8 durch die Schlitze über die radiale Fase unmittelbar auf den Träger 2 geleitet werden.

## Patentansprüche

1. Spiralisiervorrichtung (1) zum Aufbringen einer spiralförmigen Fadenlage auf einen länglichen Träger (2), der in Richtung der Trägerlängsachse (X) vortreibbar ist, mit einem um die Trägerlängsachse (X) rotierbaren Rotor (3) und mit einer Vielzahl von sich in Richtung der Trägerlängsachse (X) erstreckenden Fadenspulen-Trägerachsen (5), die auf einem Umkreisradius des Rotors (3) verteilt angeordnet sind und die jeweils zum Aufnehmen einer Vielzahl von Fadenspulen (7) ausgebildet sind, wobei an einer ersten Stirnseite des Rotors (3) Fadenbremselemente (10) über den Umfang verteilt angeordnet und synchron zueinander ansteuerbar sind und die Fäden (8) von den Fadenspulen (7) abgenommen und mit Fadenführungselementen (9) über die Fadenbremselemente (10) und einen Kammring (12), der den Träger (2) umschließt, auf den Träger (2) geleitet werden.

2. Spiralisiervorrichtung (1) nach Anspruch 1, **dadurch gekennzeichnet, dass** die Fadenbremselemente (10) als zylinderförmige, rotierbare Trommeln mit mehreren Fadenaufnahmenuten, ausgebildet sind, die sich jeweils über den Umfang der Trommeln erstrecken und in Richtung der Längsachse der Trommel voneinander beabstandet sind.

3. Spiralisiervorrichtung (1) nach Anspruch 1 oder 2, **dadurch gekennzeichnet, dass** jedes Fadenbremselement (10) eine Antriebs-/ Bremseinheit (11) hat.

4. Spiralisiervorrichtung (1) nach Anspruch 1 oder 2, **dadurch gekennzeichnet, dass** mehrere Fadenbremselemente (10) über Zahnräder, Ketten oder Riemen miteinander gekoppelt und gemeinsam angetrieben oder gebremst sind.

5. Spiralisiervorrichtung (1) nach Anspruch 4, **dadurch gekennzeichnet, dass** ein Riemenantrieb jeweils mit mindestens einer Antriebs-/ Bremseinheit (11) beeinflusst wird.

6. Spiralisiervorrichtung (1) nach Anspruch 3 oder 4, **dadurch gekennzeichnet, dass** der Rotor (3) aus separaten Kreissegmenten zusammengesetzt ist und die Fadenbremselemente (10) jeweils eines Kreissegments miteinander gekoppelt sind.

7. Spiralisiervorrichtung (1) nach Anspruch 6, **dadurch gekennzeichnet, dass** die Riemenantriebe der Kreissegmente miteinander gekoppelt sind.

8. Spiralisiervorrichtung (1) nach einem der vorhergehenden Ansprüche, **gekennzeichnet durch** eine zentrale Steuereinheit für die Fadenbremselemente (10) zur gleichmäßigen Einstellung der Fadenspannungen aller Fäden (8).

9. Spiralisiervorrichtung (1) nach einem der vorhergehenden Ansprüche, **dadurch gekennzeichnet, dass** die Fadenführungselemente (9), die zum Umlenken des Fadens (8) mit einem Winkel von mehr als 30° vorgesehen sind, als Umlenkrollen ausgebildet sind.

10. Spiralisiervorrichtung (1) nach einem der vorhergehenden Ansprüche, **dadurch gekennzeichnet, dass** die Fadenspulen-Trägerachsen (5) an mindestens einer Stirnseite (6a, 6b) des Rotors (3) lösbar gelagert sind.

11. Spiralisiervorrichtung (1) nach einem der vorhergehenden Ansprüche, **dadurch gekennzeichnet, dass** der Kammring (12) eine Durchführungsbohrung für den Träger (2) im Zentrum des Kammrings (12) und eine Vielzahl von sich radial vom Außenumfang erstreckenden Schlitzen zur Aufnahme jeweils eines Fadens (8) hat, und dass eine Innenhülse (13) im Kammring (12) angeordnet ist, die den Träger (2) umschließt, wobei die einlaufseitig an den Träger (2) angrenzende Innenkante der Innenhülse (13) radial gefasst ist.

12. Spiralisiervorrichtung (1) nach einem der vorhergehenden Ansprüche, **dadurch gekennzeichnet, dass** die Fäden (8) tangential von den Fadenspulen (7) abgenommen werden.

13. Spiralisiervorrichtung (1) nach einem der vorhergehenden Ansprüche, **dadurch gekennzeichnet, dass** Bremselemente in Lagerungen der Fadenspulen (7) angeordnet sind.

## Claims

1. Spiralling device (1) for applying a spiral-shaped thread layer to an elongate support (2) which may be advanced in the direction of the longitudinal axis (X) of the support, with a rotor (3) which may be rotated about the longitudinal axis (X) of the support and with a plurality of thread bobbin-supporting shafts (5) extending in the direction of the longitudinal axis of the support (X) which are distributed on a peripheral radius of the rotor (3) and which are respectively configured for receiving a plurality of thread bobbins (7), thread braking elements (10) being distributed over the periphery on a first front face of the rotor (3) and being triggered in a mutually synchronous manner and the threads (8) being removed from the thread bobbins (7) and being directed to the support (2) by means of thread guiding elements (9) via the thread braking elements (10) and an annular comb (12) which encloses the support (2).

2. Spiralling device (1) according to Claim 1, **characterized in that** the thread braking elements (10) are configured as cylindrical, rotatable drums with a plurality of thread receiving slots, which respectively extend over the periphery of the drums and are spaced apart from one another in the direction of the longitudinal axis of the drum.

3. Spiralling device (1) according to Claim 1 or 2, **characterized in that** each thread braking element (10) has a drive/brake unit (11).

4. Spiralling device (1) according to Claim 1 or 2, **characterized in that** a plurality of thread braking elements (10) are coupled to one another via gearwheels, chains or belts and are driven or braked together.

5. Spiralling device (1) according to Claim 4, **characterized in that** a belt drive is respectively influenced by at least one drive/brake unit (11).

6. Spiralling device (1) according to Claim 3 or 4, **characterized in that** the rotor (3) is made up of separate circular segments and the thread braking elements (10) of one respective circular segment are coupled to one another.

7. Spiralling device (1) according to Claim 6, **characterized in that** the belt drives of the circular segments are coupled to one another.

8. Spiralling device (1) according to one of the preceding claims, **characterized by** a central control unit for the thread braking elements (10) for the uniform adjustment of the thread tensions of all threads (8).

9. Spiralling device (1) according to one of the preceding claims, **characterized in that** the thread guiding elements (9) which are provided for deflecting the thread (8) at an angle of more than 30° are configured as deflection rollers.

10. Spiralling device (1) according to one of the preceding claims, **characterized in that** the thread bobbin-supporting shafts (5) are releasably mounted on at least one front face (6a, 6b) of the rotor (3).

11. Spiralling device (1) according to one of the preceding claims, **characterized in that** the annular comb (12) has a through-bore for the support (2) in the centre of the annular comb (12) and a plurality of slots extending radially from the outer periphery for receiving one respective thread (8) and **in that** an inner sleeve (13) is arranged in the annular comb (12), which encompasses the support (2), the inner edge of the inner sleeve (13) adjacent to the support (2) on the intake side being radially gripped.

12. Spiralling device (1) according to one of the preceding claims, **characterized in that** the threads (8) are removed tangentially from the thread bobbins (7).

13. Spiralling device (1) according to one of the preceding claims, **characterized in that** braking elements are arranged in bearings of the thread bobbins (7).

## Revendications

1. Dispositif (1) de spiralisation qui applique une couche de fil en spirale sur un support allongé (2) qui peut être avancé dans la direction de l'axe longitudinal (X) du support, et qui présente un rotor (3) qui peut tourner autour de l'axe longitudinal (X) du support et plusieurs axes (5) de support de bobines de fil qui s'étendent dans la direction de l'axe longitudinal (X) du support et qui sont répartis à un rayon donné autour du rotor (3) et sont tous configurés pour reprendre plusieurs bobines de fil (7), des éléments (10) de freinage de fil étant répartis à la périphérie sur un premier côté frontal du rotor (3) et pouvant être commandés en synchronisme les uns par rapport aux autres, les fils (8) étant prélevés sur les bobines de fil (7) et étant amenés sur le support (2) par des éléments (9) de guidage de fil par l'intermédiaire des éléments (10) de freinage de fil et un anneau de peigne (12) qui entoure le support (2).

2. Dispositif de spiralisation (1) selon la revendication 1, **caractérisé en ce que** les éléments (10) de freinage de fil sont configurés comme tambours cylindriques rotatifs dotés de plusieurs rainures de reprise de fil qui s'étendent toutes à la périphérie des tambours et sont maintenues à distance l'une de l'autre dans la direction de l'axe longitudinal du tambour.

3. Dispositif de spiralisation (1) selon les revendications 1 ou 2, **caractérisé en ce que** chaque élément (10) de freinage de fil présente une unité (11) d'entraînement et/ou de freinage.

4. Dispositif de spiralisation (1) selon les revendications 1 ou 2, **caractérisé en ce que** plusieurs éléments (10) de freinage de fil sont accouplés les uns aux autres par des roues dentées, des chaînes ou des courroies et sont entraînés ou freinés conjointement.

5. Dispositif de spiralisation (1) selon la revendication 4, **caractérisé en ce qu'**au moins une unité (11) d'entraînement et/ou de freinage agit sur chaque entraînement de courroie.

6. Dispositif de spiralisation (1) selon les revendications 3 ou 4, **caractérisé en ce que** le rotor (3) est constitué de plusieurs segments de cercle distincts et **en ce que** chaque élément (10) de freinage de fil est accouplé à un segment de cercle.

7. Dispositif de spiralisation (1) selon la revendication 6, **caractérisé en ce que** les entraînements de courroie des segments de cercle sont accouplés les uns aux autres.

8. Dispositif de spiralisation (1) selon l'une des revendications précédentes, **caractérisé par** une unité centrale de commande des éléments (10) de freinage de fil qui règle de manière uniforme la tension de tous les fils (8).

9. Dispositif de spiralisation (1) selon l'une des revendications précédentes, **caractérisé en ce que** les éléments (9) de guidage de fil qui sont prévus pour dévier le fil (8) sous un angle de plus de 30° sont configurés comme galets de renvoi.

10. Dispositif de spiralisation (1) selon l'une des revendications précédentes, **caractérisé en ce que** les axes (5) de support des bobines de fil sont montés de manière libérable sur au moins un côté frontal (6a, 6b) du rotor (3).

11. Dispositif de spiralisation (1) selon l'une des revendications précédentes, **caractérisé en ce que** l'anneau de peigne (12) présente un alésage qui permet au support (2) de traverser le centre de l'anneau de peigne (12) et plusieurs fentes qui reprennent chacune un fil (8) et qui s'étendent radialement partant de la périphérie extérieure, et **en ce qu'**une douille intérieure (13) qui entoure le support (2) est disposée dans l'anneau de peigne (12), le bord intérieur de la douille intérieure (13) adjacent au côté d'entrée du support (2) étant saisi radialement.

12. Dispositif de spiralisation (1) selon l'une des revendications précédentes, **caractérisé en ce que** les fils (8) sont prélevés tangentiellement sur les bobines de fil (7).

13. Dispositif de spiralisation (1) selon l'une des revendications précédentes, **caractérisé en ce que** des éléments de freinage sont disposés dans les paliers des bobines de fil (7).
